# EUROPEAN PATENT SPECIFICATION

(11) **EP 2 221 220 B1**
(45) Date of publication and mention of the grant of the patent: **30.03.2016**
(21) Application number: 10151110.3
(22) Date of filing: 19.01.2010
(51) Int. Cl.: B60R 13/10, B62J 6/00, B62J 15/00, B62M 7/12

(54) **Motorcycle**
Motorrad
Motocyclette

(30) Priority: 19.02.2009 JP 2009036394; 15.09.2009 JP 2009213130
(43) Date of publication of application: 25.08.2010
(73) Proprietor: Yamaha Hatsudoki Kabushiki Kaisha, Iwata-shi, Shizuoka 438-8501 (JP)
(72) Inventor: Mochizuki, Kan, Iwata-shi Shizuoka 4388501 (JP); Ohira, Masaru, Iwata-shi Shizuoka 4388501 (JP); Saijo, Yuta, Iwata-shi Shizuoka 4388501 (JP)
(74) Representative: Zimmermann, Tankred Klaus

(56) References cited:
- EP-A1- 1 905 981
- EP-A2- 0 757 950
- EP-A2- 1 481 881
- EP-A2- 1 772 360
- WO-A1-2010/013482
- US-A1- 2004 079 009

## Description

### Technical Field

The present invention relates to a motorcycle, particularly to a motorcycle provided with a license plate bracket attached to its rear part and a rear fender for covering a space above a rear wheel.

### Background Art

There are motorcycles (e.g., scooter type vehicles) that comprise an engine unit which is pivotably supported by a frame and a license plate bracket is attached to its rear part. For example, TW 242515 B discloses a motorcycle provided with a license plate bracket and a rear fender. The license plate bracket rearwardly extends from the rear part of the vehicle in an obliquely downward direction. The rear fender covers a space above a rear wheel.

The aforementioned license plate bracket for the motorcycle has a function of supporting a license plate and a so-called mudguard function. The mudguard function refers to a function of blocking water and mud carried by the rear wheel from scattering to a rider of a motorcycle. Especially, high priority is placed on the mudguard function in the motorcycle. The license plate bracket is therefore regarded to be formed in a large size. Specifically, the license plate bracket is preferred to be vertically and transversely elongated.

For the mudguard purpose, the license plate bracket is preferably formed in a large size, as described above. In response to the large license plate bracket, however, the rear part of a motorcycle increases in size. Now, the rear fender is configured to pivot with the rear wheel in the motorcycle provided with an engine unit pivotably supported by a frame (hereinafter referred to as "unit swing type engine unit"). Due to this structure, a considerably large space should be formed between the license plate bracket and the rear fender (including the rear wheel) for avoiding mutual contact. In other words, the license plate bracket should be disposed in a sufficiently rearward position for avoiding contact with the rear fender (including the rear wheel). When the license plate bracket is thus disposed in a sufficiently rearward position, however, the license plate bracket should be further vertically elongated for ensuring the mudguard function in the position spaced apart from the rear wheel.

As is obvious from the above, the license plate bracket should be formed in a large size for the mudguard purpose especially in the motorcycle provided with the unit swing type engine unit. However, the rear part of the motorcycle increases in size in response to the large license planet bracket.

On the other hand, it is difficult to sufficiently fulfill the mudguard function only by compactly forming the license plate bracket for compactly forming the rear part of the vehicle.

Further, EP 1772360 A2 discloses a motorcyle according to the preamble of claim 1.

### Summary of the Invention

It is an object of the present invention to produce a motorcycle provided with a unit swing type engine unit for simultaneously achieving enhancement of a mudguard performance and a compact structure of a rear part of the vehicle.
This object is achieved by a motorcycle according to claim 1.

A motorcycle according to the present invention includes a frame, an engine unit, a seat, a pair of right and left side covers, a storage box, a tail light unit, a license plate bracket and a rear fender. The frame extends in a longitudinal direction of the vehicle. The engine unit is pivotably supported by the frame. The engine unit comprises an engine body and a transmission unit. The transmission unit rearwardly extends from the engine body. The transmission unit is configured to transmit power to a rear wheel. The seat is disposed above the engine unit. The side covers transversely determine right and left sides of a space between the seat and the engine unit. The side covers have bottom edges slanting in a rearwardly upward direction. The storage box is vertically disposed between the seat and the engine unit. The storage box is also transversely disposed between the side covers. Furthermore, the storage box has a lower face disposed higher than the lower edges of the side covers in a side view. The tail light unit is transversely disposed between rear ends of the side covers. The license plate bracket is supported by the frame for being positioned lower than the tail light unit. The rear fender rearwardly extends from a vicinity of the engine body. The rear fender has a rear end positioned lower than a bottom end of the license plate bracket. The rear fender covers at least a space above of the rear wheel.

According to the inventive motorcycle, the right and left side covers slant in a rearwardly upward direction. With this structure, the rear part of the vehicle acquires a less massive appearance. In other words, the rear part achieves a compact appearance. Additionally, the bottom face of the storage box is positioned higher than the side covers in a side view of the vehicle. The rear part of the vehicle is thereby actually formed in a compact size.

On the other hand, the rear end of the rear fender is positioned lower than the bottom end of the license plate bracket while covering the rear wheel. With this structure, the rear fender efficiently inhibits mud and the like, splashed by the rear wheel, from scattering to the back of a rider of the vehicle. Therefore, the license plate bracket can be formed in a smaller size than in the conventional one.

According to the present invention, the rear part of the vehicle acquires a compact appearance and is also actually formed in a compact size. Furthermore, the license plate bracket, disposed at the rearmost position of the vehicle, can be formed in a smaller size than the conventional one. Therefore, the entire vehicle can be formed in a compact size with the combination of these structures.

According to the present invention, the mudguard performance can be enhanced with the rear fender and the compact structure of the rear part of the vehicle can be realized. Thus, an enhancement of a mudguard performance and a compact structure of the rear part of the vehicle can be achieved simultaneously in a motorcycle provided with the unit swing type engine unit.

### [Brief Description of the Drawings]

[FIG.1] FIG.1 is a side view of a scooter type motorcycle according to an embodiment of the present invention.
[FIG.2] FIG.2 is a detailed side view illustrating one of the lateral sides of a rear part of the motorcycle.
[FIG.3] FIG.3 is a partial cross-sectional view of the rear part of the motorcycle.
[FIG.4] FIG.4 is a rear view of the motorcycle for illustrating an arrangement of a license plate bracket and flasher lights.
[FIG.5] FIG.5 is a side view for illustrating one of the lateral sides of a rear fender.
[FIG.6] FIG.6 is a side view for illustrating the other of the lateral sides of the rear fender.

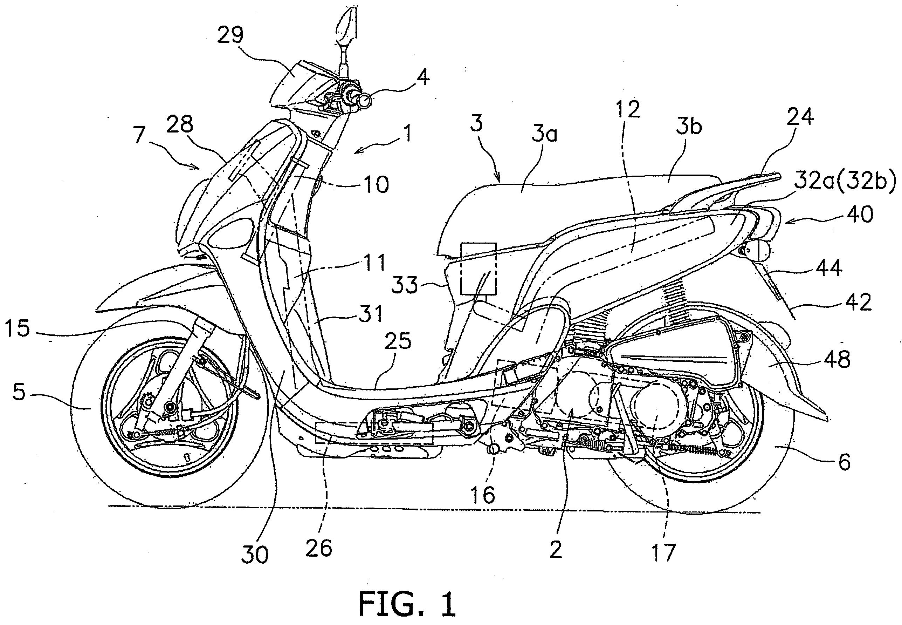

FIG.1 illustrates a scooter type motorcycle according to an embodiment of the present invention. The motorcycle is mainly composed of a frame 1 extending in a longitudinal direction of the vehicle, an engine unit 2, a seat 3, a handle 4, a pair of front and rear wheels 5, 6, and a cover 7.

The frame 1 includes a head pipe 10, a front frame 11, a pair of right and left rear frames 12 (note that FIG.1 illustrates only the left rear frame). A steering shaft is rotatably inserted into the head pipe 10. A front fork 15 is attached to the bottom end of the steering shaft, whereas the handle 4 is fixed to the top end of the steering shaft. The front wheel 5 is rotatably attached to the tip of the front fork 15. The top end (i.e., front end) of the front frame 11 is connected to the head pipe 10. The front frame 11 extends in a downwardly rearward direction in a side view of the vehicle. The front ends of the right and left rear frames 12 are connected to the lower part of the front frame 11. Each of the rear frames 12 is composed of two portions. One of the portions is disposed under the footboard to be described and extends to the rearward. The other of the portions is disposed under the seat 3 and extends in an upwardly rearward direction.

The engine unit 2 is pivotably supported by the rear frames 12. The engine unit 2 includes an engine body 16 and a belt continuously variable transmission (CVT) 17. The belt CVT 17 functions as a transmission unit for transmitting the power from the engine body 16 to the rear wheel 6. The engine unit 2 further includes a centrifugal clutch mechanism and the like. The engine body 16, together with the rear wheel 6, is disposed in the transverse center of the vehicle. Additionally, the belt CVT 17 is disposed lateral to the engine body 16 (i.e., on the left side of the engine body 16 in a plan view of the vehicle). As described above, the engine body 16, the belt CVT 17 and the rear wheel 6, together with a rear fender 48 to be described, are configured to be pivotable with respect to the right and left rear frames 12.

The belt CVT 17 is accommodated in the interior of a transmission case for blocking undesired (foreign) objects (e.g., dust and mud) from attaching to it. The belt CVT 17 is composed of a driving pulley, a driven pulley and an endless belt wrapped around the pulleys. A detailed explanation of the belt CVT 17 will be hereinafter omitted.

The seat 3 is disposed above the engine unit 2. The seat 3 is composed of a rider seat section 3a and a tandem seat section 3b. The sections 3a, 3b are integrally formed, and the tandem seat section 3b is formed behind the rider seat section 3a. The front part of the seat 3 is rotatably mounted to a storage box to be described through a hinge (not illustrated in the figure). The seat 3 is configured to be vertically opened/closed about the hinge as a fulcrum. Additionally, an assist grip 24 is disposed behind the seat 3. The assist drip 24 is fixed to the rear frames 12.

A space is produced in front of the seat 3. A footboard 25 is formed below the space for allowing a rider to put his/her feet in a side-by-side relation. A fuel tank 26 is disposed under the footboard 25.

The cover 7 is a resin member. The cover 7 covers the frame 1 and the handle 4. The cover 7, including the aforementioned footboard 25, is composed of a front cover 28, a handle cover 29, an inner fender 30, a leg shield 31, a rear cover 33 and a pair of right and left side covers 32b, 32a (FIG.1 illustrates only the left side cover 32a).

A head light and flashers are disposed in the front cover 28. A meter panel is disposed on the top face of the handle cover 29. The inner fender 30 is disposed below the front cover 28, and covers a space behind the front wheel 5. The leg shield 31 covers a space behind the front frame 11. The rear cover 33 is vertically disposed between the footboard 25 and the seat 3. The rear cover 33, together with the side covers 32a, 32b, sections a space positioned under the seat 3. The side covers 32a, 32b upwardly stand in a position behind the footboard 25, and cover the front plane and the right and left lateral planes of the space positioned under the seat 3. More specifically, the side covers 32a, 32b transversely determine right and left sides of the space between the seat 3 and the engine unit 2. Additionally, the lower edges of the side covers 32a, 32b upwardly slant towards the rear end thereof.

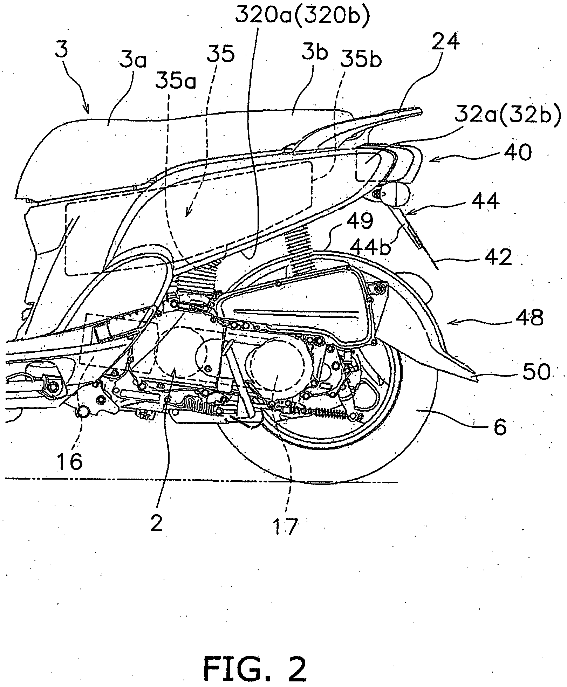

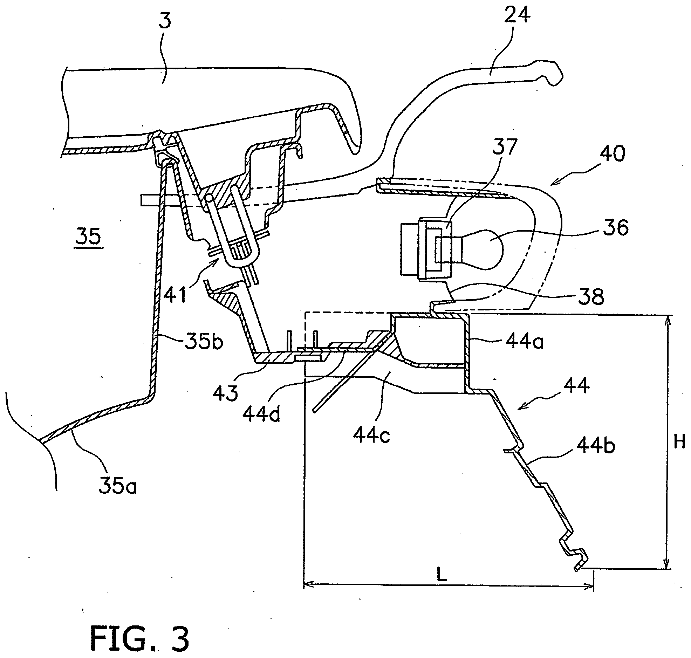

As illustrated in FIGS.2 and 3, a storage box 3'5 is formed under the seat 3. The storage box 35 can accommodate a variety of goods such as a rider's helmet. Additionally, a tail light unit 40 is disposed on the rear end of the vehicle. The tail light unit 40 is mainly composed of a light bulb 36, a holder 37 for holding the light bulb 36, and a reflecting mirror 38. The tail light unit 40 is disposed between the rear part of the left side cover 32a and that of the right side cover 32b.

The storage box 35 is herein positioned vertically between the seat 3 and the engine unit 2. Additionally, the storage box 35 is positioned transversely between the side covers 32a, 32b. In a side view, a lower face 35a of the storage box 35 is positioned higher than lower edges 320a, 320b (see FIG.2) of the side covers 32a, 32b. In other words, the storage box 35 is concealed by the side covers 32a, 32b in a side view. Additionally, the top of the storage box 35 is covered with the seat 3. On the other hand, a lock mechanism 41 (see FIG.3) is disposed below the rear part of the seat 3. The lock mechanism 41 is configured to lock/unlock the seat 3 for closing/opening it. A rear wall 35b of the storage box 35 is disposed forward of the tail light unit 40. In other words, the rear wall 35b is spaced apart from the tail light unit 40. A maintenance cover 43 is disposed below a space positioned between the lock mechanism 41 and the tail light unit 40.

A license plate bracket 44 is disposed under the tail light unit 40. A license plate 42 is attached to the license bracket 44. Note FIG.3 illustrates a situation in which the license plate 42 is taken out of the license bracket 44. The license plate bracket 44 is supported by the frame 12. As illustrated in the enlarged view of FIG.3, the license plate bracket 44 includes a vertical wall 44a, a slant wall 44b and a pair of right and left lateral walls 44c. The vertical wall 44a continuously extends from the bottom of the tail light unit 40 to the downward. Additionally, the upper portion of the vertical wall 44a entirely extends to the forward. Specifically, the forwardly extended upper portion is bent downward in its intermediate part, and again extends to the forward. The extension, positioned forward of the bent part, is a forward extension 44d. The forward extension 44d forwardly extends along the lower face of the maintenance cover 43. The tip of the forward extension 44d is fixedly inserted into a groove formed on the maintenance cover 43. The slant wall 44b extends from the bottom end of the vertical wall 44a in an obliquely rearward direction. The right and left lateral walls 44c are formed in the same shape. The lateral walls 44c forwardly extend from the transverse ends of the vertical wall 44a. As illustrated in FIG.3, vertical length H of the license plate bracket 44 is shorter than longitudinal length L thereof. The vertical length H herein corresponds to a length from the top end of the vertical wall 44a to the bottom end of the slant wall 44b. On the other hand, the longitudinal length L corresponds to a length from the front ends of the lateral walls 44c to the rear end of the slant wall 44b.

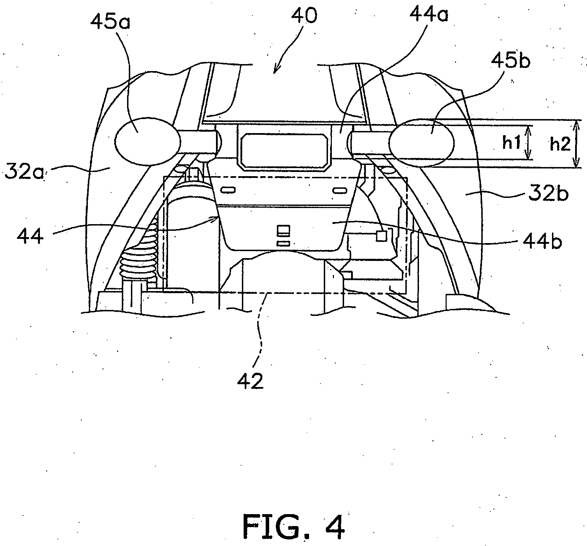

Furthermore, when the license plate 42 is supported by the license plate bracket 44, the bottom end of the rear part of the license plate bracket 44 (i.e., the bottom end of the slant wall 44b) is positioned higher than the bottom end of the license plate 42. As illustrated in the rear view of FIG.4, a pair of right and left flasher lights 45b, 45a is attached to the vertical wall 44a of the license plate bracket 44. Vertical length h1 of the vertical wall 44a is shorter than vertical length h2 of the flasher lights 45a, 45b.

Additionally, as is shown in FIGS.1 and 2, the rear fender 48 is disposed below the storage box 35 in order to cover a space above the rear wheel 6. The rear fender 48 includes a fender body 49 and a protrusion 50. The fender body 49 rearwardly extends from a vicinity of the engine body 16. The fender body 49 covers a space above the rear wheel 6, and partially covers lateral sides of the wheel 6. The rear end of the fender body 49 is positioned lower than the bottom end of the license plate bracket 44. The protrusion 50 is rearwardly protruded from the bottom part of the fender body 49 in an obliquely downward direction. The bottom end of the rear fender 48 extends below the center of the rear wheel 6.

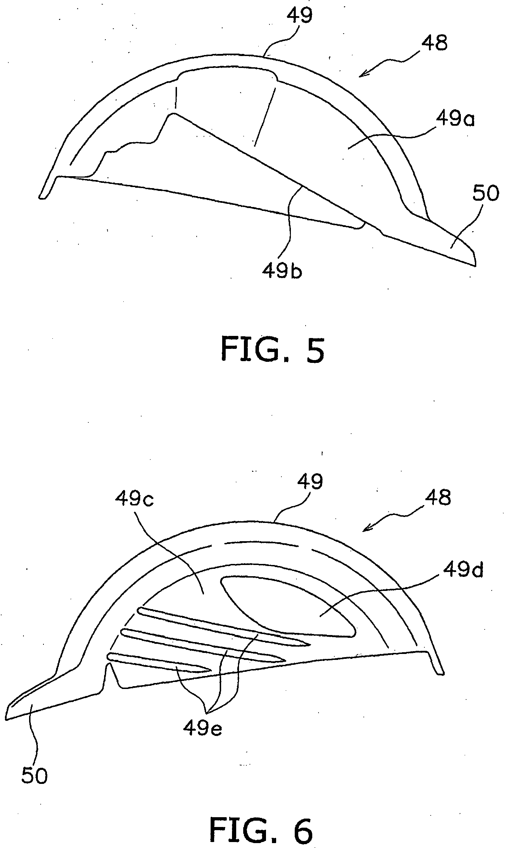

FIGS.5 and 6 illustrate the rear fender 48 taken out of the motorcycle. FIG.5 is a side view for illustrating one of the lateral sides of the rear fender 48 (a left side of the rear fender 48 seen from the back of the vehicle). On the other hand, FIG.6 is a side view for illustrating the other of the lateral sides of the rear fender 48 (a right side view of the rear fender 48 seen from the back of the vehicle).

As illustrated in FIG.5, a radial-extended face 49a is formed in one of the lateral faces of the fender body 49 of the rear fender 48. The radial-extended face 49a ranges from the front end to the rear end of the lateral face. Additionally, a cutout 49b is formed in the radial-extended face 49a. The cutout 49b is formed in a roughly triangle shape. In other words, the radial-extended face 49a is cut out at a steep angle from its front end to roughly the middle of the front end and the longitudinal center. In other words, the apex of the triangle cutout 49b is positioned in roughly the middle of the front end and the longitudinal center of the radial-extended face 49a. Then, the radial-extended face 49a is cut out in an obliquely downward direction from the apex to the rear end. With this structure, a mudguard flat portion is formed in a part of the radial-extended face 49a ranging from roughly the center to the rear end.

As illustrated in FIG.6, a radial-extended face 49c is formed in the other of the lateral faces of the fender body 49 of the rear fender 48. The radial-extended face 49c ranges from the front end to the rear end of the lateral face. An opening 49d is formed in the radial-extended face 49c. The opening 49d ranges from the front end to a longitudinal center of the radial-extended face 49c. Additionally, three linear ribs 49c are formed in a part of the radial-extended face 49c in which the opening 49d is not formed. The ribs 49c are formed in parallel to each other. The respective ribs 49c rearwardly slant in an obliquely upward direction.

From a perspective of mudguard, the radial-extended faces 49a, 49c are preferably formed on the entire lateral faces (i.e., from the front end to the rear end) of the fender body 49. When areas of the radial-extended face 49a, 49c are increased, however, the rear fender 48 acquires much massive appearance and its weight is actually increased. Furthermore, expansion of the flat portions reduces strength of the rear fender 48. Reduction of the strength results in vibration of the radial-extended faces 49a, 49c and sound is accordingly generated.

In response to this, the rear fender 48 of the present embodiment is designed to enhance its stiffness by forming the ribs 49e and forming the cutout 49b and the opening 49d in the flat portions of the radial-extended faces 49a, 49c to reduce areas of the radial-extended faces 49a, 49c. With this structure, it is possible to inhibit the massive appearance and the actual weight of the rear fender and to prevent the generation of sounds.

As illustrated in FIGS.5 and 6, the flat portion ranges from the longitudinal center to the rear end in the respective radial-extended faces 49a, 49c. Therefore, it is possible to effectively fulfill the mudguard function with the flat portions.

In the present embodiment, the lower edges of the side covers 32a, 32b slant in a rearwardly upward direction. In addition, the storage box 35 is disposed for being concealed by the side covers 32 in a side view. Furthermore, a space is produced between the side cover 32 and the rear fender 48. Therefore, the rear part of the vehicle is free from massive appearance, and is actually formed in a compact size. Furthermore, the vertical length of the license plate bracket 44 is short enough so that the bottom end thereof is positioned higher than that of the license plate 42. Accordingly, the rear part of the vehicle can acquire a further compact appearance.

Furthermore, the vehicle of the present embodiment is provided with the unit swing type engine unit 2. However, the vertical length of the license plate bracket 44 is formed shorter than that of the conventional bracket. Accordingly, chances are less that the rear fender 48 and the license plate bracket 44 interfere with each other. Therefore, it is possible to dispose the license plate bracket 44 in a relatively forward position. This makes it possible to compactly form the rear part of the vehicle.

On the other hand, the rear fender 48 covers the rear wheel 6 while extending so that the rear end thereof is positioned lower than that of the license plate bracket 44. More specifically, the bottom end of the rear part of the rear fender 48 extends lower than the center of the rear wheel 6. Therefore, the mudguard function is enhanced with the rear fender 48 despite that the vertical length of the license plate bracket 44 is short. More specifically, mud and the like, attaching to the rear wheel 6, are carried upward by the rotation of the rear wheel 6 without being removed. However, it is possible to effectively inhibit the carried mud and the like from being splashed to the back of the seat, because the bottom end of the rear fender 48 further extends lower than the center of the rear wheel. Additionally, the mud and the like, carried within the rear fender 48 by the rotation of the rear wheel, are prevented from being laterally scattered with the flat portions of the radial-extended faces 49a, 49c provided on the lateral faces of the rear part of the rear fender 48. Therefore, it is possible to inhibit mud and the like from being splashed to the lateral of the seat from the lateral of the rear wheel 6.

### <Characteristics>

The following is the summary of characteristics of the present embodiment.
(a) The lower edges 320a, 320b of the side covers 32a, 32b slant in a rearwardly upward direction. Accordingly, the rear part of the vehicle is free from massive appearance and acquires compact appearance.
(b) The bottom face of the storage box 35 is positioned higher than the side covers 32a, 32b in a side view. Therefore, the rear part of the vehicle is actually formed in a compact size.
(c) The rear fender 48 can effectively inhibit mud and the like splashed by the rear wheel 6 from being scattered to the back of a rider. Therefore, the license plate bracket 44 can be formed in a smaller size than the conventional bracket.
(d) The rear part of the vehicle acquires compact appearance and is actually formed in a compact size. Furthermore, the license plate bracket 44 is formed in a small size. Therefore, the entire vehicle can be further compactly formed with the combination of the above structure.
(e) The vertical length of the license plate bracket 44 is shorter than the longitudinal length thereof. Therefore, it is possible to compactly form the rear part of the vehicle while attachment strength of the license plate bracket 44 to the vehicle is sufficiently ensured.
(f) When the license plate is fixed to the license plate bracket 44, the bottom end of the rear part of the license plate bracket 44 is positioned higher than the bottom end of the license plate. In other words, the license plate bracket 44 is formed in a small size. This makes it possible to compactly form the rear part of the vehicle.
(g) The bottom end of the rear fender 48 is positioned lower than the center of the rear wheel 6. Therefore, it is possible to inhibit mud and the like, carried by the rotation of the rear wheel 6, from being splashed.
(h) The protrusion 50 is provided in the rear part of the rear fender 48. The protrusion 50 rearwardly protrudes from the lower part of the fender body 48a in an obliquely downward direction. It is thereby possible to further effectively inhibit mud and the like from being splashed.
(i) The vertical length of the storage box 35 can be ensured while the storage box 35 is positioned higher than the bottom ends of the side covers 32a, 32b in a side view. It is thereby possible to compactly form the rear part of the vehicle and sufficiently ensure the capacity of the storage box 35.
(j) The tail light unit 40 is disposed behind the storage box 35. In other words, the width of the tail light unit 40 can be reduced as much as possible in the position. When the width of the tail light unit 40 is reduced, the width of the license plate bracket 44, continuing to the tail light unit 40, also can be reduced. Consequently, it is possible to compactly form the rear part of the vehicle.
(k) The vertical length of the vertical wall 44a of the license plate bracket 44 is smaller than the vertical lengths of the flasher lights 45b, 45a. Therefore, it is possible to compactly form the rear part of the vehicle.

### Other Embodiments

The shapes and structures of the radial-extended faces of the rear fender 48 are not limited to the aforementioned embodiment. The radial-extended faces may be formed in a variety of shapes and structures.

A variety of changes can be made for the frame. For example, the head pipe, the front frame and the rear frame may be separate components and may be connected to each other. Alternatively, a part or all of them are integrally formed.

Furthermore, the structures of the side covers are not limited to the aforementioned embodiment. For example, each of the side covers may be composed of a plurality of divided cover members.

### Explanation of the Reference Numerals

- 1: Frame
- 2: Engine unit
- 3: Seat
- 16: Engine
- 17: Belt continuously variable transmission (transmission unit)
- 32a, 32b: Side covers
- 35: Storage box
- 40: Tail light unit
- 42: License plate
- 44: License plate bracket
- 45a, 45b: Flasher lights
- 48: Rear fender
- 49: Fender body
- 50: Protrusion

## Claims

1. A motorcycle, comprising:
a frame (1) extending in a longitudinal direction of the vehicle;
an engine unit (2) pivotably supported by the frame (1), the engine unit (2) composed of an engine body (16) and a transmission unit (17), the transmission unit (17) rearwardly extending from the engine body (16), the transmission unit (17) configured to transmit the power to a rear wheel (6);
a seat (3) disposed above the engine unit (2);
a pair of right and left side covers (32a,32b) for transversely determining right and left sides of a space between the seat (3) and the engine unit (2), the side covers (32a, 32b) having bottom edges slanting in a rearwardly upward direction;
a storage box (35) vertically disposed between the seat (3) and the engine unit (2), the storage box (35) transversely disposed between the side covers (32a, 32b), the storage box (35) having a lower face disposed higher than the lower edges of the side covers (32a, 32b) in a side view;
a tail light unit (40) transversely disposed between rear ends of the side covers (32a, 32b); and
a rear fender (48) rearwardly extending from a vicinity of the engine body (16) the rear fender covering at least a space above the rear wheel;
**characterized in that**
a license plate bracket (44) is supported by the frame (1) at a position lower than the tail light unit (40);
the rear fender (48) has a rear end positioned lower than a bottom end of the license plate bracket (44);
a space is produced between the side covers (32a, 32b) and the rear fender (48);
a bottom end of the rear fender (48) is positioned lower than a center of the rear wheel (6); and
a rear end of the license plate bracket (44) is positioned more forward than a rear end of the rear fender (48), whereby the vertical length of the license plate bracket (44) is limited in order to reduce the chance that the rear fender (48) and the license plate bracket (44) interfere with each other.

2. The motorcycle according to claim 1, wherein vertical length of the license plate bracket (44) is shorter than longitudinal length of the license plate bracket (44).

3. The motorcycle according to claim 1 or 2, wherein a bottom end of a rear part of the license plate bracket (44) is positioned higher than a bottom end of a license plate (42) when the license plate (42) is supported by the license plate bracket (44).

4. The motorcycle according to one of claims 1 to 3, wherein the rear fender (48) includes a fender body (49) and a protrusion (50), the fender body (49) covering a space above the rear wheel (6), the fender body (49) partially covering lateral sides of the rear wheel (6), the protrusion (50) rearwardly protruding from a lower part of the fender body (49) in an obliquely downward direction, the protrusion positioned lower than the bottom end of the license plate bracket (44).

5. The motorcycle according one of claims 1 to 4, wherein a rear wall of the storage box (35) is disposed forward of the tail light unit (40) while the rear wall is spaced apart from the tail light unit (40).

6. The motorcycle according to one of claims 1 to 5,
further comprising a pair of flasher lights (45a, 45b),
wherein the license plate bracket (44) includes a vertical wall part and a slant wall, the vertical wall extending downward, the vertical wall positioned lower than the tail light unit (40), the slant wall extending from a bottom end of the vertical wall in an obliquely rearward direction,
wherein the flasher lights (45a, 45b) are disposed in the vertical wall, and
wherein vertical length of the vertical wall is smaller than that of the flasher light (45a, 45b).

## Patentansprüche

1. Ein Motorrad, das folgende Merkmale aufweist:
einen Rahmen (1), der sich in einer Längsrichtung des Fahrzeugs erstreckt;
eine Motoreinheit (2), die schwenkbar durch den Rahmen getragen wird, wobei die Motoreinheit (2) aus einem Motorkörper (16) und einer Übertragungseinheit (17) besteht, wobei sich die Übertragungseinheit (17) von dem Motorkörper (16) nach hinten erstreckt, wobei die Übertragungseinheit (17) konfiguriert ist, um die Leistung zu einem Hinterrad (6) zu übertragen;
einen Sitz (3), der über der Motoreinheit (2) angeordnet ist;
ein Paar von rechten und linken Seitenabdeckungen (32a, 32b), um rechte und linke Seiten eines Raums zwischen dem Sitz (3) und der Motoreinheit (2) quer zu bestimmen, wobei die Seitenabdeckungen (32a, 32b) untere Kanten aufweisen, die in einer Richtung nach hinten oben schräg sind;
einen Aufbewahrungskasten (35), der vertikal zwischen dem Sitz (3) und der Motoreinheit (2) angeordnet ist, wobei der Aufbewahrungskasten (35) quer zwischen den Seitenabdeckungen (32a, 32b) angeordnet ist, wobei der Aufbewahrungskasten (35) eine untere Fläche aufweist, die höher angeordnet ist als die unteren Kanten der Seitenabdeckungen (32a, 32b) in einer Seitenansicht;
eine Rücklichteinheit (40), die quer zwischen hinteren Enden der Seitenabdeckungen (32a, 32b) angeordnet ist; und
ein hinteres Schutzblech (48), das sich von einer Nähe des Motorkörpers (16) nach hinten erstreckt, wobei das hintere Schutzblech zumindest einen Raum über dem hinteren Rad bedeckt;
**gekennzeichnet dadurch, dass**
eine Nummernschildhalterung (44) durch den Rahmen (1) an einer Position getragen wird, die niedriger ist als die Rücklichteinheit (40);
das hintere Schutzblech (48) ein hinteres Ende aufweist, das niedriger angeordnet ist als ein unteres Ende der Nummernschildhalterung (44);
ein Raum erzeugt ist zwischen den Seitenabdeckungen (32a, 32b) und dem hinteren Schutzblech (48);
ein unteres Ende des hinteren Schutzblechs (48) niedriger positioniert ist als eine Mitte des Hinterrads (6); und
ein hinteres Ende der Nummernschildhalterung (44) weiter vorne positioniert ist als ein hinteres Ende des hinteren Schutzblechs (48), wodurch die vertikale Länge der Nummernschildhalterung (44) begrenzt ist, um die Wahrscheinlichkeit zu reduzieren, dass das hintere Schutzblech (48) und die Nummernschildhalterung (44) einander stören.

2. Das Motorrad gemäß Anspruch 1, bei dem eine vertikale Länge der Nummernschildhalterung (44) kürzer ist als eine longitudinale Länge der Nummernschildhalterung (44).

3. Das Motorrad gemäß Anspruch 1 oder 2, bei dem ein unteres Ende eines hinteren Teils der Nummernschildhalterung (44) höher angeordnet ist als ein unteres Ende eines Nummernschilds (42), wenn das Nummernschild (42) durch die Nummernschildhalterung (44) getragen wird.

4. Das Motorrad gemäß einem der Ansprüche 1 bis 3, bei dem das hintere Schutzblech (48) einen Schutzblechkörper (49) und einen Vorsprung (50) umfasst, wobei der Schutzblechkörper (49) einen Raum über dem Hinterrad (6) bedeckt, wobei der Schutzblechkörper (49) seitliche Seiten des Hinterrads (6) teilweise bedeckt, wobei der Vorsprung (50) von einem unteren Teil des Schutzblechkörpers (49) in einer Richtung schräg nach unten nach hinten vorsteht, wobei der Vorsprung niedrigerer positioniert ist als das untere Ende der Nummernschildhalterung (44).

5. Das Motorrad gemäß einem der Ansprüche 1 bis 4, bei dem eine Rückwand des Aufbewahrungskastens (35) weiter vorne angeordnet ist als die Rücklichteinheit (40), während die Rückwand beabstandet von der Rücklichteinheit (40) angeordnet ist.

6. Das Motorrad gemäß einem der Ansprüche 1 bis 5,
das ferner ein Paar von Blinklichtern (45a, 45b) aufweist,
wobei die Nummernschildhalterung (44) einen vertikalen Wandteil und eine geneigte Wand umfasst, wobei sich die vertikale Wand nach unten erstreckt, die vertikale Wand niedrigerer positioniert ist als die Rücklichteinheit (40), wobei sich die geneigte Wand von einem unteren Ende der vertikalen Wand in einer Richtung schräg nach hinten erstreckt,
wobei die Blinklichter (45a, 45b) in der vertikalen Wand angeordnet sind, und
wobei die vertikale Länge der vertikalen Wand geringer ist als diejenige der Blinklichter (45a, 45b).

## Revendications

1. Motocyclette, comprenant:
un châssis (1) s'étendant dans une direction longitudinale du véhicule;
une unité de moteur (2) supportée de manière pivotante par le châssis (1), l'unité de moteur (2) étant composée d'un corps de moteur (16) et d'une unité de transmission (17), l'unité de transmission (17) s'étendant vers l'arrière depuis le corps de moteur (16), l'unité de transmission (17) étant configurée pour transmettre l'énergie à une roue arrière (6);
un siège (3) disposé au-dessus de l'unité de moteur (2);
une paire de couvercles latéraux droit et gauche (32a, 32b) destinés à déterminer transversalement les côtés droit et gauche d'un espace entre le siège (3) et l'unité de moteur (2), les couvercles latéraux (32a, 32b) présentant des bords inférieurs inclinés dans une direction vers l'arrière et vers le haut;
une boîte de rangement (35) disposée verticalement entre le siège (3) et l'unité de moteur (2), la boîte de rangement (35) étant disposée transversalement entre les couvercles latéraux (32a, 32b), la boîte de rangement (35) présentant une face inférieure disposée plus haute que les bords inférieurs des couvercles latéraux (32a, 32b), en vue latérale;
une unité de feu arrière (40) disposée transversalement entre les extrémités arrière des couvercles latéraux (32a, 32b); et
un garde-boue arrière (48) s'étendant vers l'arrière à partir d'une proximité du corps de moteur (16), le garde-boue arrière recouvrant au moins un espace au-dessus de la roue arrière;
**caractérisée par le fait que**
un support de plaque d'immatriculation (44) est supporté par le châssis (1) en une position plus basse que l'unité de feu arrière (40);
le garde-boue arrière (48) présente une extrémité arrière positionnée plus basse que l'extrémité inférieure du support de plaque d'immatriculation (44);
un espace est produit entre les couvercles latéraux (32a, 32b) et le garde-boue arrière (48);
une extrémité inférieure du garde-boue arrière (48) est positionnée plus basse qu'un centre de la roue arrière (6); et
une extrémité arrière du support de plaque d'immatriculation (44) est positionnée plus en avant que l'extrémité arrière du garde-boue arrière (48), la longueur verticale du support de plaque d'immatriculation (44) étant limitée pour réduire le risque que le garde-boue arrière (48) et le support de plaque d'immatriculation (44) n'interfèrent l'un avec l'autre.

2. Motocyclette selon la revendication 1, dans laquelle la longueur verticale du support de plaque d'immatriculation (44) est plus courte que la longueur longitudinale du support de plaque d'immatriculation (44).

3. Motocyclette selon la revendication 1 ou 2, dans laquelle une extrémité inférieure d'une partie arrière du support de plaque d'immatriculation (44) est positionnée plus haute que l'extrémité inférieure d'une plaque d'immatriculation (42) lorsque la plaque d'immatriculation (42) est supportée par le support de plaque d'immatriculation (44).

4. Motocyclette selon l'une des revendications 1 à 3, dans laquelle le garde-boue arrière (48) comporte un corps de garde-boue (49) et une saillie (50), le corps de garde-boue (49) recouvrant un espace au-dessus de la roue arrière (6), le corps de garde-boue (49) recouvrant partiellement les côtés latéraux de la roue arrière (6), la saillie (50) ressortant vers l'arrière d'une partie inférieure du corps de garde-boue (49) dans une direction oblique vers le bas, la saillie étant positionnée plus basse que l'extrémité inférieure du support de plaque d'immatriculation (44).

5. Motocyclette selon l'une des revendications 1 à 4, dans laquelle une paroi arrière de la boîte de rangement (35) est disposée en avant de l'unité de feu arrière (40), tandis que la paroi arrière est espacée de l'unité de feu arrière (40).

6. Motocyclette selon l'une des revendications 1 à 5,
comprenant par ailleurs une paire de clignoteurs (45a, 45b),
dans laquelle le support de plaque d'immatriculation (44) comporte une partie de paroi verticale et une paroi inclinée, la paroi verticale s'étendant vers le bas, la paroi verticale étant positionnée plus basse que l'unité de feu arrière (40), la paroi inclinée s'étendant depuis une extrémité inférieure de la paroi verticale dans une direction obliquement vers l'arrière,
dans laquelle les clignoteurs (45a, 45b) sont disposés dans la paroi verticale, et
dans laquelle la longueur verticale de la paroi verticale est plus petite que celle du clignoteur (45a, 45b).
